# EUROPEAN PATENT SPECIFICATION

(11) **EP 3 934 288 B1**
(45) Date of publication and mention of the grant of the patent: **26.06.2024**
(21) Application number: 20183738.2
(22) Date of filing: 02.07.2020
(51) Int. Cl.: H04W 4/40

(54) **METHOD, COMPUTER PROGRAM, APPARATUS, AND VEHICLE FOR PREDICTING A QUALITY OF SERVICE**
VERFAHREN, COMPUTERPROGRAMM, VORRICHTUNG, UND FAHRZEUG ZUR VORHERSAGE EINER DIENSTQUALITÄT
PROCÉDÉ, PROGRAMME INFORMATIQUE, APPAREIL, ET VÉHICULE DE PRÉDICTION D'UNE QUALITÉ DE SERVICE

(43) Date of publication of application: 05.01.2022
(73) Proprietor: VOLKSWAGEN AG, 38440 Wolfsburg (DE)
(72) Inventor: Jornod, Guillaume, 10245 Berlin (DE); Pfadler, Andreas, 13359 Berlin (DE); Gonzalez Vazquez, Israel, 38442 Wolfsburg (DE)

(56) References cited:
- EP-A1- 3 322 204
- EP-A1- 3 634 017
- NEUMEIER STEFAN ET AL: "Measuring the Feasibility of Teleoperated Driving in Mobile Networks", 2019 NETWORK TRAFFIC MEASUREMENT AND ANALYSIS CONFERENCE (TMA), IFIP, 19 June 2019 (2019-06-19), pages 113-120, XP033590553, DOI: 10.23919/TMA.2019.8784466

## Description

The present invention relates to a method, a computer program, an apparatus and a vehicle for predicting a Quality of Service (QoS), more specifically, but not exclusively, to a concept for predicting QoS in a mobile communication system based on a future data demand.

Vehicular communication is a field of research and development. To enable an autonomous or semi-autonomous driving of vehicles, vehicles are expected to use Vehicle-to-Vehicle-communication (V2V) and Vehicle-to-Network (V2N) communication, e.g. to coordinate driving maneuvers and/or to receive tele-operated driving instructions. This communication is generally wireless, i.e. vehicles may wirelessly communicate with other vehicles in their vicinity and/or with backend services via cellular mobile communication systems.

Tele-operated driving (ToD) is getting more and more interest. The main concept of ToD is an automated vehicle (AV) remotely driven by a control/command center (CC). CC and AV may be far away from each other. They are connected via a radio communication system (e.g. 4^{th}, 5^{th} Generation mobile communication systems (4G, 5G)) and its backhaul. Therefore, a certain end-to-end (E2E) delay and data rate are to be expected. The CC controls the automated vehicle (AV) via remote control. In direct control the CC directly controls one or more actuators of the AV.

Tele-operated driving (ToD) might become a key technology in order to solve issues with L4/L5 (L4: highly automatic, L5: fully automatic) driven vehicles, such as interpretation issues or deadlocks (situations, which cannot be resolved by autonomous or automatic control mechanisms only). These issues occur when automatic driven vehicles (AV) are not able to interpret and to solve a situation due to not clear traffic conditions, e.g. an accident or a construction site. These vehicles may need external instruction from someone else to solve the situation, which can be the so-called control center (CC). A ToO vehicle will be driven remotely by CC in a ToO session, an operator therein, respectively.

To operate this remote control, data are exchanged through a cellular network. The quality of the uplink (perception data) and downlink (control data) connection, also named quality of service (QoS) has a dramatic impact on the quality of application (QoA). Examples of impact include non-smooth transition between automated driving and ToD and adapting the type of control (direct or indirect).

Document WO 2019/081039 A1 relates to a network operator (OMS), a teleoperation application (TOApplication) and an application (TODriver) for a teleoperable vehicle. The OMS is capable of creating a network slice for teleoperating a teleoperable vehicle along at least one route, receiving, from the TOApplication, a slice configuration request comprising the QoS for the at least one route, and configuring the network slice to support the QoS for the at least one route. The TOApplication is capable of communicating, towards the OMS, a request for creating the network slice, receiving, from the teleoperable vehicle, a teleoperation service request comprising a set of teleoperation configurations, mapping each teleoperation configuration to a respective QoS, and sending the slice configuration request comprising the QoS to the OMS. The TODriver is capable of sending the teleoperation service request to the TOApplication, and controlling the route to be followed by the teleoperable vehicle based on information from the TOApplication.

Document EP 3 634 017 A1 shows a method for predicting a quality of service for a communication about at least one communication link of at least one communication device. The method comprises the steps of sending from the communication device a quality-of-service prediction request message to a communication service prediction server. Further, the method comprises predicting the quality of service in the communication service prediction server and sending back a quality-of-service prediction response message to the communication device.

Document EP 3 322 204 B1 shows a driver assistance system for improving an availability and a reliability of autonomous driving modes of a vehicle. The driver assistance system comprises one backend-server, wherein the backend-server comprises a quality-of-service map module operable to maintain at least one up to date QoS map for at least one mobile network operator. The QoS map is indicative of a coverage of a Wireless Wide Area Network WWAN. Further, the backend-server comprises a scheduling module operable to schedule appropriate map data downloads to the vehicle.

Naturally, communication capacities of the involved communication systems are limited. Consequently, a load of the system is a determining factor of how many parallel sessions/connections with a certain QoS can be provided. For services with critical QoS demands, such as ToD, it is therefore crucial to have reliable QoS predictions.

There is a demand for an improved concept for predicting QoS. This demand is satisfied according to the independent claims.

Embodiments are based on the finding that data demand of applications can be predicted and the data demand is what determines the load of a mobile communication system. Embodiments may predict the impact of deadlock situations/or HD map updates in a predictive QoS (pQoS) system. An increased (over-) use of the communication systems can lead to a drop in QoS. As embodiments predict this usage, at least a part of the future variation of the QoS can also be predicted and therefore an improved pQoS can be achieved.

Embodiments provide a method for predicting a Quality of Service, QoS, in a mobile communication system. The method comprises estimating a future data demand for applications in an area of the mobile communication system and predicting the QoS for the area based on the data demand. A future data demand can be predicted/estimated and utilized for pQoS.

For example, the estimating of the future data demand comprises estimating a future demand for high density map updates provided to vehicles in the area. High density map updates are known to consume radio capacities as large data amounts may need to be communicated. Such updates can be predicted based on release dates and update schedules. Hence, their impact on pQoS can be foreseen and considered in QoS prediction.

The estimating of the future data demand may comprise estimating a probability of deadlock traffic situations for vehicles in the area. A probability of deadlock situations may also be foreseen, e.g. based on traffic statistics, event schedules, weather forecasts, etc. Deadlock situations may cause increased data demand and may impact QoS. Hence, the probability of deadlock situations may be used in embodiments to improve pQoS.

In some embodiments, the estimating of the future data demand may comprise estimating a future demand for tele-operated driving sessions for vehicles in the area. ToO sessions also consume radio capacities as their QoS demand can be high in terms of data rate and their delay tolerance may be rather low. ToO sessions may hence contribute to the load of a communication system and therewith also influence QoS rendering them a significant contributor to pQoS.

For example, the method may comprise obtaining information related to a density of road construction work in the area and estimating the future demand for tele-operated driving sessions for vehicles in the area based on the information related to the density of road construction work. Construction work is mostly predictable as such information may be obtained from officials and may hence contribute to a more reliable pQoS.

The estimating may comprise estimating a channel load based on the data demand of vehicles in the area. The higher the channel load the lower a pQoS and hence prediction can take advantage of a predicted channel load. For example, the method comprises predicting lower QoS if the channel load is higher.

The estimating may further comprise estimating a network load based on the data demand of vehicles in the area. Traffic density as such correlates with the load in the system and may be taken into account in embodiments. The method may further comprise predicting lower QoS if the network load (traffic density) is higher.

In some embodiments, the method may include determining a map of estimated data demands. A map may be useful in radio resource and processing capacity management.

A first lower QoS is predicted if an estimated future data demand is higher than a predetermined data demand threshold and a second higher QoS is predicted if the estimated future data demand is lower than the predetermined data demand threshold.

Embodiments further provide a computer program having a program code for performing one or more of the described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Another embodiment is an apparatus for predicting a Quality of Service, QoS, in a mobile communication system. The apparatus comprises one or more interfaces configured to communicate in a communication network and a control module configured to control the one or more interfaces, wherein the control module is further configured to perform one of the methods described herein. Further embodiments are a vehicle comprising the apparatus and a control center not forming part of the invention comprising the apparatus.

Some other features or aspects will be described using the following non-limiting embodiments of apparatuses or methods or computer programs or computer program products by way of example only, and with reference to the accompanying figures, in which:
Fig. 1 illustrates a block diagram of an embodiment of a method for predicting a Quality of Service, QoS, in a mobile communication system; and
Fig. 2 illustrates a block diagram of an embodiment of an apparatus for predicting a Quality of Service, QoS, in a mobile communication system, an embodiment of a vehicle.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

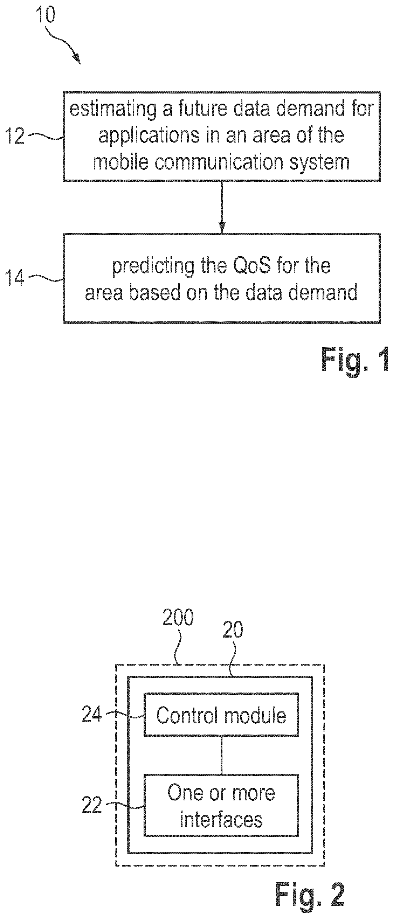

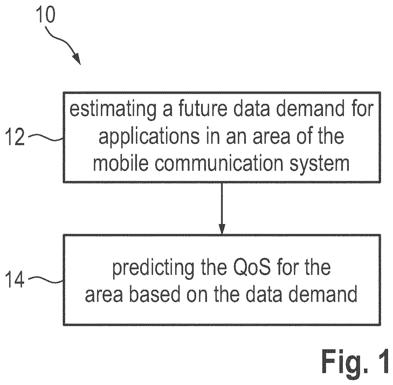

Fig. 1 illustrates a block diagram of an embodiment of a method 10 for predicting a Quality of Service, QoS, in a mobile communication system. The method 10 comprises estimating 12 a future data demand for applications in an area of the mobile communication system. The method 10 further comprises predicting 14 the QoS for the area based on the data demand. In embodiments the area may be any geographical area, e.g. a cell area covered by the mobile communication system, a street section, an intersection, a highway section, a downtown area, etc.

As outlined, the ToO performance is related to the communication link performance. The communication link may comprise a wireless part and a wired part. The pQoS may relate at least to the wireless part in some embodiments. For example, the communication link comprises the air interface (Uu link in 3GPP (3^{rd} Generation Partnership Project), wireless part of the communication link) between the vehicle and the base station (access node) and then the connection through the operator backbone (core network, wired part). Depending on the quality of the link, the control of the vehicle is adapted: the vehicle may be controlled directly (joystick-like) or indirectly (waypoints, or environmental model editions). The environment may be characterized by the type of road, e.g. highway, country road, city road, residential area road, number of lanes, traffic density, traffic dynamics, etc. Moreover, the time of day, the day of week, the weather, current traffic condition/density; and other factors may be comprised in the information related to the environment of the tele-operated vehicle.

Embodiments may provide a pQoS based on the estimated future data demand. Two main factors are crucial for the determination of the pQoS in a ToO session: the future data rate and, even more important, the future latency. The pQoS may comprise at least one of a latency and a data rate. In embodiments QoS or pQoS may comprise one or more elements of the group of, latency, data rate, error rate/reliability, packet error rate, packet inter-reception time, etc. Such QoS may depend on different factors, e.g. the radio access technology (RAT), pathloss, environment, interference situation, load, processing delay, etc.

Fig. 2 illustrates a block diagram of an embodiment of an apparatus 20 for predicting QoS, an embodiment of a vehicle 200. As shown in Fig. 2 the apparatus 20 for the vehicle and for predicting the QoS comprises one or more interfaces 22 configured to communicate in a communication network. The apparatus 20 further comprises a control module 24, which is configured to control the one or more interfaces 22, and which is coupled to the one or more interfaces 22. The control module 24 is further configured to perform one of the methods 10 described herein. As further shown in Fig. 2 in broken lines (as optional from the perspective of the apparatus 20), an entity 200 comprising an embodiment of the apparatus 20 is another embodiment. Such entity 200 may be a vehicle or a control center (e.g. a server, a computer, a base station, hardware, etc.).

The apparatus 20 and the vehicle or network component/control center 200 may communicate at least partly through a mobile communication system. The mobile communication system, may, for example, correspond to one of the Third Generation Partnership Project (3GPP)-standardized mobile communication networks, where the term mobile communication system is used synonymously to mobile communication network. The messages (input data, control information) may hence be communicated through multiple network nodes (e.g. internet, router, switches, etc.) and the mobile communication system, which generates the delay or latencies considered in embodiments. For example, the uplink direction refers to the direction from a vehicle to the command center and the downlink direction refers from the command center to the vehicle.

The mobile or wireless communication system may correspond to a mobile communication system of the 5th Generation (5G, or New Radio) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Service provision may be carried out by a network component, such as a base station transceiver, a relay station or a UE, e.g. coordinating service provision in a cluster or group of multiple UEs/vehicles. A base station transceiver can be operable or configured to communicate with one or more active mobile transceivers/vehicles and a base station transceiver can be located in or adjacent to a coverage area of another base station transceiver, e.g. a macro cell base station transceiver or small cell base station transceiver. Hence, embodiments may provide a mobile communication system comprising two or more mobile transceivers/vehicles 200 and one or more base station transceivers, wherein the base station transceivers may establish macro cells or small cells, as e.g. pico-, metro-, or femto cells. A mobile transceiver or UE may correspond to a smartphone, a cell phone, a laptop, a notebook, a personal computer, a Personal Digital Assistant (PDA), a Universal Serial Bus (USB) -stick, a car, a vehicle, a road participant, a traffic entity, traffic infrastructure etc. A mobile transceiver may also be referred to as User Equipment (UE) or mobile in line with the 3GPP terminology. A vehicle may correspond to any conceivable means for transportation, e.g. a car, a bike, a motorbike, a van, a truck, a bus, a ship, a boat, a plane, a train, a tram, etc.

A base station transceiver can be located in the fixed or stationary part of the network or system. A base station transceiver may be or correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a gNodeB, a Base Transceiver Station (BTS), an access point, a remote radio head, a relay station, a transmission point, etc., which may be further subdivided in a remote unit and a central unit.

A mobile transceiver or vehicle can be associated with a base station transceiver or cell. The term cell refers to a coverage area of radio services provided by a base station transceiver, e.g. a NodeB (NB), an eNodeB (eNB), a gNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. A base station transceiver may operate multiple sectorized antennas. In the following, a cell may represent an according base station transceiver generating the cell or, likewise, a base station transceiver may represent a cell the base station transceiver generates.

The apparatus 20 may be comprised in a server, a base station, a NodeB, a UE, a vehicle, a network component, a control center, a relay station, or any service coordinating network entity in embodiments. It is to be noted that the term network component may comprise multiple subcomponents, such as a base station, a server, etc.

In embodiments the one or more interfaces 22 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 22 may comprise further components to enable according communication in the (mobile) communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 22 may be coupled to one or more antennas, which may correspond to any transmit and/or receive antennas, such as horn antennas, dipole antennas, patch antennas, sector antennas etc. In some examples the one or more interfaces 22 may serve the purpose of transmitting or receiving or both, transmitting and receiving, information, such as information, input data, control information, further information messages, etc.

As shown in Fig. 2 the respective one or more interfaces 22 are coupled to the respective control module 24 at the apparatus 20. In embodiments the control module 24 may be implemented using one or more processing units, one or more processing devices, any means for processing, such as a processor, a computer or a programmable hardware component being operable with accordingly adapted software. In other words, the described functions of the control module 24 may as well be implemented in software, which is then executed on one or more programmable hardware components. Such hardware components may comprise a general-purpose processor, a Digital Signal Processor (DSP), a micro-controller, etc.

In embodiments, communication, i.e. transmission, reception or both, may take place among mobile transceivers/vehicles 200 directly, e.g. forwarding input data or control information to/from a control center. Such communication may make use of a mobile communication system. Such communication may be carried out directly, e.g. by means of Device-to-Device (D2D) communication. Such communication may be carried out using the specifications of a mobile communication system. An example of D2D is direct communication between vehicles, also referred to as Vehicle-to-Vehicle communication (V2V), car-to-car, Dedicated Short Range Communication (DSRC), respectively. Technologies enabling such D2D-communication include 802.11p, 3GPP systems (4G, 5G, NR and beyond), etc.

In embodiments, the one or more interfaces 22 can be configured to wirelessly communicate in the mobile communication system, e.g. in an embodiment in which the apparatus 20 is implemented in vehicle 200 and the method 10 is carried out at the vehicle 200. In order to do so radio resources are used, e.g. frequency, time, code, and/or spatial resources, which may be used for wireless communication with a base station transceiver as well as for direct communication. The assignment of the radio resources may be controlled by a base station transceiver, i.e. the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc. For example, in direct Cellular Vehicle-to-Anything (C-V2X), where V2X includes at least V2V, V2-Infrastructure (V2I), etc., transmission according to 3GPP Release 14 onward can be managed by infrastructure (so-called mode 3) or run in a UE.

In order to determine a speed limit in an embodiment for a tele-operated vehicle 200, it may be critical to predict the QoS in the communication network.

In embodiments methods may predict QoS using seasonality analysis (rush hours etc.) and path predictions and additionally knowledge that some applications are triggered due to predictable events. Two examples of these applications are ToO sessions and HD map update. The estimating 12 of the future data demand comprises estimating a future demand for high density map updates provided to vehicles in the area, and optionally may comprise estimating a probability of deadlock traffic situations for vehicles in the area, and/or estimating a future demand for tele-operated driving sessions for vehicles in the area. The method 10 may hence comprise determining a map of estimated data demands in such an embodiment.

The knowledge of a potential increase of these events can be used to predict a drop in QoS. For example, an increasing number of ToO sessions may be predicted by operating a prediction of deadlock situations. On a macroscopic scale, a map summarizing the probability of deadlock situations may be generated.

When multiple high probability spots are in the same area, embodiments may predict an increased number of high data rate connections, leading to a drop in the QoS on the air interface. A local prediction may be carried out that way. When a significant amount of high probability spots are present in a large scale region, embodiments may predict an increased usage of the network backbone, but also a demand for CC that exceeds the offer.

When an automated vehicle is in a deadlock situation and cannot reach a CC, it has to stay idle, which in turn might put other automated vehicles in the same deadlock situation. More automated vehicles in a deadlock situation overload the cell on a local scale and create even more demand for CCs. For example, information related to a density of road construction work in the area may be obtained and the future demand for tele-operated driving sessions for vehicles in the area may be predicted based on the information related to the density of road construction work.

Another embodiment predicts a cascade trigger of high data rate applications, e.g. using HD map update. Alternatively or additionally to a deadlock situation prediction, knowledge of a release of a new HD map update, which will trigger a local update among automated vehicles, may be used. The knowledge of the release of a new HD map update can for instance be the fact that a new construction work is being started.

The estimating 12 may comprise estimating a channel load based on the data demand, which may be a local demand, of vehicles in the area. A lower QoS may be predicted if the channel load is higher. The estimating 12 may comprise estimating a network load based on the data demand of vehicles in the area. A lower QoS may be predicted if the network load is higher.

In general, the method 10 comprises predicting a first lower QoS if an estimated future data demand is higher than a predetermined data demand threshold and predicting a second higher QoS if the estimated future data demand is lower than the predetermined data demand threshold.

In another embodiment the method 10 may comprise the following steps
a) Estimating a future probability of deadlock,
b) Estimating the probability of ToO sessions based on the probability of deadlock,
c) Estimating the channel load based on the probability of ToO sessions,
d) Estimating the network load based on the probability of ToO sessions, and
e) Estimating the future QoS based on the channel and network loads.

A method for predicting a future PQoS based on the probability of deadlock may hence be provided in embodiments.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim.

It is further to be noted that methods disclosed in the specification or in the claims may be implemented by a device having means for performing each of the respective steps of these methods.

### List of reference signs

- 10: method for predicting a Quality of Service, QoS, in a mobile communication system
- 12: estimating a future data demand for applications in an area of the mobile communication system
- 14: predicting the QoS for the area based on the data demand
- 20: apparatus for predicting a Quality of Service, QoS, in a mobile communication system
- 22: one or more interfaces
- 24: control module
- 200: vehicle, control center, network entity

## Claims

1. A method (10) to be executed by an apparatus for a vehicle for predicting a Quality of Service, QoS, in a mobile communication system, the method (10) comprising estimating (12) a future data demand for applications in an area of the mobile communication system;
wherein the estimating (12) of the future data demand comprises estimating a future demand for high density map updates provides to vehicles in the area;
predicting (14) the QoS for the area based on the data demand, wherein the predicting (14) the QoS for the area comprises predicting a first lower QoS if an estimated future data demand is higher than a predetermined data demand threshold and predicting a second higher QoS if the estimated future data demand is lower than the predetermined data demand threshold; and
adapt a control of the vehicle based on the predicted QoS.

2. The method (10) of claim 1, wherein the estimating (12) of the future data demand comprises estimating a probability of deadlock traffic situations for vehicles in the area.

3. The method (10) of one of the claims 1 to 2, wherein the estimating (12) of the future data demand comprises estimating a future demand for tele-operated driving sessions for vehicles in the area.

4. The method (10) of claim 3, further comprising obtaining information related to a density of road construction work in the area and estimating the future demand for tele-operated driving sessions for vehicles in the area based on the information related to the density of road construction work.

5. The method (10) of one of the claims 1 to 4, wherein the estimating (12) comprises estimating a channel load based on the data demand of vehicles in the area.

6. The method (10) of claim 5, further comprising predicting lower QoS if the channel load is higher.

7. The method (10) of one of the claims 1 to 6, wherein the estimating comprises estimating a network load based on the data demand of vehicles in the area.

8. The method (10) of claim 7, further comprising predicting lower QoS if the network load is higher.

9. The method (10) of one of the claims 1 to 8, further comprising determining a map of estimated data demands.

10. A computer program having a program code for performing at least one of the methods (10) of claims 1 to 9, when the computer program is executed on a computer, a processor, or a programmable hardware component.

11. An apparatus (20) for predicting a Quality of Service, QoS, in a mobile communication system, the apparatus (20) comprising
one or more interfaces (22) configured to communicate in a communication network; and
a control module (24) configured to control the one or more interfaces, wherein the control module is further configured to perform one of the methods (10) of claims 1 to 9.

12. A vehicle (200) comprising the apparatus (20) of claim 11.

## Patentansprüche

1. Verfahren (10), das durch eine Vorrichtung für ein Fahrzeug zum Vorhersagen einer Dienstgüte, QoS, in einem Mobilkommunikationssystem ausgeführt werden soll, das Verfahren (10) umfassend ein Schätzen (12) eines zukünftigen Datenbedarfs an Anwendungen in einem Bereich des Mobilkommunikationssystems;
wobei das Schätzen (12) des zukünftigen Datenbedarfs das Schätzen eines zukünftigen Bedarfs an Aktualisierungen einer Karte hoher Dichte umfasst, die Fahrzeugen in dem Bereich bereitgestellt werden;
Vorhersagen (14) der QoS für den Bereich basierend auf dem Datenbedarf, wobei das Vorhersagen (14) der QoS für den Bereich das Vorhersagen einer ersten niedrigeren QoS umfasst, falls ein geschätzter zukünftiger Datenbedarf höher als ein vorbestimmter Datenbedarfsschwellenwert ist, und Vorhersagen einer zweiten höheren QoS, falls der geschätzte zukünftige Datenbedarf niedriger als der vorbestimmte Datenbedarfsschwellenwert ist; und
Anpassen einer Steuerung des Fahrzeugs basierend auf der vorhergesagten QoS.

2. Verfahren (10) nach Anspruch 1, wobei das Schätzen (12) des zukünftigen Datenbedarfs das Schätzen einer Wahrscheinlichkeit von Stillstandverkehrssituationen für Fahrzeuge in dem Bereich umfasst.

3. Verfahren (10) nach einem der Ansprüche 1 bis 2, wobei das Schätzen (12) des zukünftigen Datenbedarfs das Schätzen eines zukünftigen Bedarfs an ferngesteuerten Fahrten für Fahrzeuge in dem Bereich umfasst.

4. Verfahren (10) nach Anspruch 3, ferner umfassend ein Erhalten von Informationen, die sich auf eine Dichte von Straßenbauarbeiten in dem Bereich beziehen, und das Schätzen des zukünftigen Bedarfs an ferngesteuerten Fahrten für Fahrzeuge in dem Bereich basierend auf den Informationen, die sich auf die Dichte von Straßenbauarbeiten beziehen.

5. Verfahren (10) nach einem der Ansprüche 1 bis 4, wobei das Schätzen (12) das Schätzen einer Kanallast basierend auf dem Datenbedarf von Fahrzeugen in dem Bereich umfasst.

6. Verfahren (10) nach Anspruch 5, ferner umfassend das Vorhersagen einer niedrigeren QoS, falls die Kanallast höher ist.

7. Verfahren (10) nach einem der Ansprüche 1 bis 6, wobei das Schätzen das Schätzen einer Netzlast basierend auf dem Datenbedarf von Fahrzeugen in dem Bereich umfasst.

8. Verfahren (10) nach Anspruch 7, ferner umfassend das Vorhersagen einer niedrigeren QoS, falls die Netzlast höher ist.

9. Verfahren (10) nach einem der Ansprüche 1 bis 8, ferner umfassend das Bestimmen einer Karte geschätzter Datenbedarfe.

10. Computerprogramm, das einen Programmcode zum Durchführen mindestens eines der Verfahren (10) nach den Ansprüchen 1 bis 9 aufweist, wenn das Computerprogramm auf einem Computer, einem Prozessor oder einer programmierbaren Hardwarekomponente ausgeführt wird.

11. Vorrichtung (20) zum Vorhersagen einer Dienstgüte, QoS, in einem Mobilkommunikationssystem, die Vorrichtung (20) umfassend:
eine oder mehrere Schnittstellen (22), die konfiguriert sind, um in einem Kommunikationsnetz zu kommunizieren; und
ein Steuermodul (24), das konfiguriert ist, um die eine oder die mehreren Schnittstellen zu steuern, wobei das Steuermodul ferner konfiguriert ist, um eines der Verfahren (10) nach den Ansprüchen 1 bis 9 durchzuführen.

12. Fahrzeug (200), umfassend die Vorrichtung (20) nach Anspruch 11.

## Revendications

1. Procédé (10) à exécuter par un appareil pour un véhicule destiné à prédire une qualité de service, QoS, dans un système de communication mobile, le procédé (10) comprenant l'estimation (12) d'une demande future de données pour des applications dans une zone du système de communication mobile ;
dans lequel l'estimation (12) de la demande future de données comprend l'estimation d'une demande future pour des mises à jour cartographiques à haute densité fournies aux véhicules dans la zone ;
la prédiction (14) de la QoS pour la zone sur la base de la demande de données, dans lequel la prédiction (14) de la QoS pour la zone comprend la prédiction d'une première QoS inférieure si une demande future de données estimée est supérieure à un seuil de demande de données prédéterminé et la prédiction d'une seconde QoS supérieure si la demande future de données estimée est inférieure au seuil de demande de données prédéterminé ; et
l'adaptation d'une commande du véhicule sur la base de la QoS prédite.

2. Procédé (10) selon la revendication 1, dans lequel l'estimation (12) de la demande future de données comprend l'estimation d'une probabilité de situations d'interblocage de trafic pour des véhicules dans la zone.

3. Procédé (10) selon l'une des revendications 1 à 2, dans lequel l'estimation (12) de la demande future de données comprend l'estimation d'une demande future pour des sessions de conduite télécommandées pour des véhicules dans la zone.

4. Procédé (10) selon la revendication 3, comprenant en outre l'obtention d'informations relatives à une masse volumique de travaux de construction routière dans la zone et l'estimation de la demande future pour des sessions de conduite télécommandées pour des véhicules dans la zone sur la base des informations relatives à la masse volumique de travaux de construction routière.

5. Procédé (10) selon l'une des revendications 1 à 4, dans lequel l'estimation (12) comprend l'estimation d'une charge de canal sur la base de la demande de données de véhicules dans la zone.

6. Procédé (10) selon la revendication 5, comprenant en outre la prédiction de QoS inférieure si la charge de canal est supérieure.

7. Procédé (10) selon l'une des revendications 1 à 6, dans lequel l'estimation comprend l'estimation d'une charge de réseau sur la base de la demande de données de véhicules dans la zone.

8. Procédé (10) selon la revendication 7, comprenant en outre la prédiction de QoS inférieure si la charge réseau est plus élevée.

9. Procédé (10) selon l'une des revendications 1 à 8, comprenant en outre la détermination d'une carte de demandes de données estimées.

10. Programme d'ordinateur ayant un code de programme permettant de mettre en oeuvre au moins l'un des procédés (10) selon les revendications 1 à 9, lorsque le programme d'ordinateur est exécuté sur un ordinateur, un processeur ou un composant matériel programmable.

11. Appareil (20) destiné à prédire une qualité de Service, QoS, dans un système de communication mobile, l'appareil (20) comprenant
une ou plusieurs interfaces (22) configurées pour communiquer dans un réseau de communication ; et
un module de commande (24) configuré pour commander la ou les interfaces, dans lequel le module de commande est en outre configuré pour mettre en oeuvre l'un des procédés (10) selon les revendications 1 à 9.

12. Véhicule (200) comprenant l'appareil (20) selon la revendication 11.
